# EUROPÄISCHE PATENTSCHRIFT

(11) **EP 1 266 742 B1**
(45) Veröffentlichungstag und Bekanntmachung des Hinweises auf die Patenterteilung: **12.12.2007**
(21) Anmeldenummer: 02011319.7
(22) Anmeldetag: 23.05.2002
(51) Int. Cl.: B29C 45/17

(54) **Verfahren und Vorrichtung zum axialen Verschieben von Holmen**
Method and apparatus for the axial shifting of tiebars
Procédé et dispositif pour le déplacement axial de colonnes

(30) Priorität: 15.06.2001 DE 10128887
(43) Veröffentlichungstag der Anmeldung: 18.12.2002
(73) Patentinhaber: Adcuram Maschinenbauholding GmbH, 80333 München (DE)
(72) Erfinder: Kassner, Ralf, 58566 Kierspe (DE)
(74) Vertreter: Gosdin, Michael

(56) Entgegenhaltungen:
- EP-A- 0 313 035
- EP-A- 0 404 288
- CH-A- 576 829
- DE-A- 2 455 702
- US-A- 3 882 588
- US-A- 4 285 384

## Beschreibung

Die Erfindung betrifft eine Spritzgießmaschine mit einer Düsenplatte, einer Stirnplatte, einer verschieblichen Schließplatte, mindestens einem Holm, der im Betriebszustand der Spritzgießmaschine axial unverschieblich an der Düsenplatte und an der Stirnplatte angeordnet ist und die Schließplatte durchsetzt, und einer Einbauhöhenverstelleinrichtung, die an der Stirnplatte angeordnet ist und mit der der mindestens eine Holm relativ zur Stirnplatte axial verstellbar ist.

Aus dem Stand der Technik ist es bekannt, den Holm einer Spritzgießmaschine zum Zwecke der Montage oder Demontage des Werkzeugs aus dem Werkzeugeinbauraum zu entfernen.

Die DE 38 36 097 zeigt eine Spritzgießmaschine, bei der durch Lösen und Entfernen der Säulenmutter die Säule axial verschoben werden kann, um den Austausch eines Werkzeugs zu ermöglichen. Die DE 39 20 690 zeigt eine Säulenzieheinrichtung für eine Spritzgießmaschine die ein automatisches Ziehen der Säule ermöglicht. Es ist vorgesehen, dass die Säulenmutter zweigeteilt aufgebaut ist, wobei die Kraftübertragung auf die bewegliche Platte über eine mit der Säule in Verbindung stehenden Schelle realisiert wird.

Die CH 576 829 A5 offenbart ein Verfahren, mit dem schrittweise mindestens ein Holm der Spritzgießmaschine aus dem Werkzeugbereich herausgefahren werden kann, um Platz für den Werkzeugwechsel zu schaffen.

Nachteilig bei diesen bekannten Lösungen ist, dass beim Einsatz einer Spritzgießmaschine mit einer Einbauhöhenverstellung zum Einstellen der Platten auf verschiedene Werkzeughöhen der Verstellmechanismus außer Eingriff kommt und folglich beim Montieren der Säule zu Schwierigkeiten führt.

**Aufgabe** der Erfindung ist es daher, eine Vorrichtung bereitzustellen, bei der die Holme ohne manuelle Arbeit aus mindestens einer Platte entfernt werden können, ohne dass die relevanten Bauteile einer Einbauhöhenverstellung außer Eingriff gebracht werden.

Die **Lösung** der Aufgabe ist in Verbindung mit dem Oberbegriff des Anspruchs 1 dadurch gekennzeichnet, dass die Einbauhöhenverstelleinrichtung eine drehbar in der Stirnplatte gelagerte Holmmutter aufweist, die mit einem Drehantrieb versehen ist, wobei die Holmmutter über ein Gewinde mit der Stirnplatte in Verbindung steht, und daß der Holm fest mit einem Anschlagselement verbunden ist, das eine größere Außenabmessung, insbesondere einen größeren Durchmesser, als der Holm aufweist und in eine Ausnehmung der Holmmutter eingreifen kann, wobei die Holmmutter einen axialen Anschlag für das Anschlagselement aufweist, wobei Mittel zum programmgesteuerten automatischen Klemmen des Holms relativ zur Schließplatte vorhanden sind und wobei Mittel zum programmgesteuerten automatischen Klemmen des Holms relativ zur Stirnplatte vorhanden sind.

Fortbildungsgemäß ist vorgesehen, dass Holmmutter und Anschlagselement als konzentrische Bauteile ausgeführt sind, um ein sicheres paßgenaues Ineinanderfügen zu gewährleisten. Wichtig ist, eine Verdrehsicherung zwischen der Holmmutter und dem Anschlagselement vorzusehen. Eine mögliche Einrichtung zur drehfesten Verbindung beider Teile ist die Verwendung einer Paßfeder.

Bei der Montage der Holme ist es wichtig, exakt die vor der Demontage herrschende Position zu erreichen, hierfür ist am Holm im Bereich der Düsenplatte ein Anschlagring angeordnet, der sich an der Düsenplatte abstützen kann. Um das Lösen und Verbinden des Holms mit der Düsenplatte zu ermöglichen, ist im Bereich der Düsenplatte ein Motor angeordnet, der automatisch programmgesteuert betrieben wird.

In den Zeichnungen ist ein Ausführungsbeispiel der Erfindung dargestellt.
- Fig. 1: zeigt schematisch einen Holm einer Spritzgießmaschine in seiner befestigten Position und
- Fig. 2: zeigt den Holm in gezogener Position, in

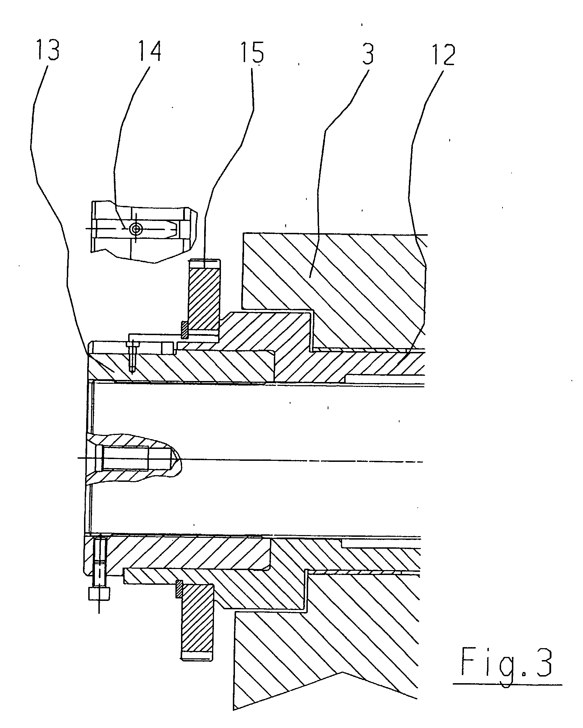

- Fig. 3: ist die zweite Holmmutter vergrößert dargestellt.

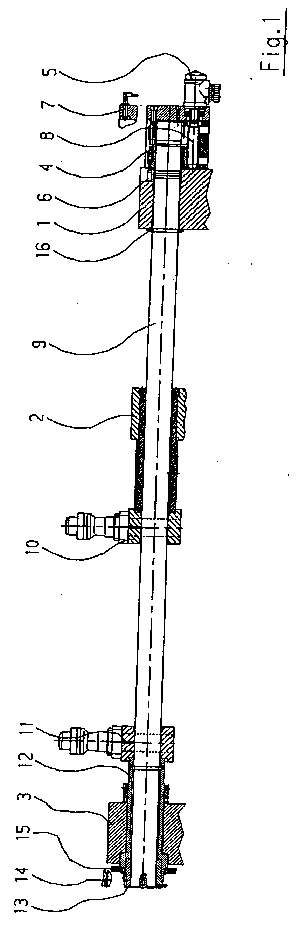

In Figur 1 ist der Holm 9 einer Spritzgießmaschine in befestigter Position gezeigt, die Verfahrensschritte zum Entfernen des Holms 9 aus der Düsenplatte 1 werden nachfolgend beschrieben. Nach Start des Holmziehprogrammes - die Entfernung soll ja automatisch erfolgen - dreht der Hydromotor 5 die erste Holmmutter 4 mit der Schneckenspindel 8 lose, bis der Näherungsschalter 7 anspricht und den Hydromotor 5 abschaltet. Der Holm 9 kann jetzt herausgezogen werden, in dem folgende Schritte durchgeführt werden:

Die Festklemmung 10 an der Schließplatte 2 klemmt mittels eines Hydromotors den Holm 9 über Klemmbolzen ein und die Festklemmung 11 an der Stirnplatte 3 wird gelöst. Durch das Zurückziehen der Schließplatte 2 wird der Holm 9 über den Fahrweg der Schließplatte 2 aus der Düsenplatte 1 gezogen. Bei diesem Vorgang bleibt die zweite Holmmutter 12 der Stirnplatte 3 in ihrer Lage unverändert, wodurch der Drehantrieb 15 der Einbauhöhenverstellung weiterhin im Eingriff bleibt. Das auf dem Holm 9 mit gezogene Anschlagelement 13, hier ein Gewindering, fädelt mit der Paßfeder 14 aus der zweiten Holmmutter 12 aus. Im nächsten Schritt klemmt die Festklemmung 11 an der Stirnplatte 3 den Holm 9 mittels Klemmbolzen ein und die Klemmbolzen der Feststellung 10 an der Schließplatte 2 werden gelöst und geben folglich den Holm 9 frei.

Die Schließplatte 2 wird nun in Richtung Stirnplatte 3 in die Offenstellung verfahren. In dieser Offenstellung der Schließplatte 2 klemmt nun die Feststellung 10 wieder den Holm 9 ein, während die Feststellung 11 der Stirnplatte 3 diesen wieder frei gibt.

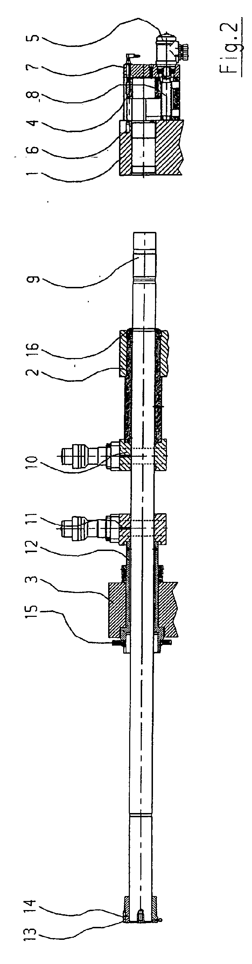

Dieser Wechsel findet solange statt, bis der Anschlagring 16 an der Schließplatte 2 anliegt. Hiermit wird verhindert, daß der Holm 9 aus der Schließplatte 2 ausfädelt. Diese Situation ist aus Figur 2 ersichtlich.

Der Werkzeugeinbauraum ist nun soweit frei, daß das Werkzeug eingebaut werden kann. Nach erfolgtem Einbau läuft der beschriebene Vorgang in umgekehrter Reihenfolge ab, bis der Anschlagring 16 an der Düsenplatte anliegt.

Mittels des Hydromotor 5 wird die erste Holmmutter 4 mit der Schnekkenspindel 8 gegen die Düsenplatte 1 verschraubt. Das Abschalten des Hydromotors 5 erfolgt hierbei über den Endschalter 6, nachdem die erste Holmmutter 4 festgezogen ist.

Der gesamte Holmziehprozess ist abgeschlossen und die Spritzgießmaschine ist wieder betriebsbereit.

### Bezugszeichenliste:

- 1: Düsenplatte
- 2: Schließplatte
- 3: Stirnplatte
- 4: erste Holmmutter
- 5: Hydromotor
- 6: Endschalter
- 7: Näherungsschalter
- 8: Schneckenspindel
- 9: Holm
- 10: Festklemmung an Schließplatte 2
- 11: Festklemmung an Stirnplatte 3
- 12: zweite Holmmutter
- 13: Anschlagelement
- 14: Paßfeder
- 15: Drehantrieb
- 16: Anschlagring

## Patentansprüche

1. Spritzgießmaschine mit
- einer Düsenplatte (1),
- einer Stirnplatte (3),
- einer verschieblichen Schließplatte (2),
- mindestens einem Holm (9), der im Betriebszustand der Spritzgießmaschine axial unverschieblich an der Düsenplatte (1) und an der Stirnplatte (3) angeordnet ist und die Schließplatte (2) durchsetzt, und
- einer Einbauhöhenverstelleinrichtung, die an der Stirnplatte (3) angeordnet ist und mit der der mindestens eine Holm (9) relativ zur Stirnplatte (3) axial verstellbar ist,
**dadurch gekennzeichnet, dass**
die Einbauhöhenverstelleinrichtung eine drehbar in der Stirnplatte (3) gelagerte zweite Holmmutter (12) aufweist, die mit einem Drehantrieb (15) versehen ist, wobei die zweite Holmmutter (12) über ein Gewinde mit der Stirnplatte (3) in Verbindung steht, und
dass der Holm (9) fest mit einem Anschlagselement (13) verbunden ist, das eine größere Außenabmessung, insbesondere einen größeren Durchmesser, als der Holm (9) aufweist und in eine Ausnehmung der zweiten Holmmutter (12) eingreifen kann,
wobei die zweite Holmmutter (12) einen axialen Anschlag für das Anschlagselement (13) aufweist,
wobei Mittel (10) zum programmgesteuerten automatischen Klemmen des Holms (9) relativ zur Schließplatte (2) vorhanden sind und
wobei Mittel (11) zum programmgesteuerten automatischen Klemmen des Holms (9) relativ zur Stirnplatte (3) vorhanden sind.

2. Vorrichtung nach Anspruch 1, **dadurch gekennzeichnet, dass** die zweite Holmmutter (12) und das Anschlagselement (13) als konzentrische Bauteile ausgeführt sind.

3. Vorrichtung nach Anspruch 1 oder 2, **dadurch gekennzeichnet, dass** zwischen der zweiten Holmmutter (12) und dem Anschlagselement (13) eine Einrichtung zur drehfesten Verbindung beider Teile, insbesondere eine Paßfeder (14), angeordnet ist.

4. Vorrichtung nach einem der Ansprüche 1 bis 3, **dadurch gekennzeichnet, dass** am Holm (9) im Bereich der Düsenplatte (1) ein Anschlagring (16) angeordnet ist.

5. Vorrichtung nach einem der Ansprüche 1 bis 4, **dadurch gekennzeichnet, dass** im Bereich der Düsenplatte (1) ein Motor (5), vorzugsweise ein Hydromotor, zum automatischen programmgesteuerten Lösen und Verbinden des Holms (9) mit der Düsenplatte (1) angeordnet ist.

## Claims

1. Injection moulding machine with
- a fixed platen (1),
- an end plate (3),
- a moving platen (2),
- at least one tie bar (9), which in the operating state of the injection moulding machine is arranged axially immovably on the fixed platen (1) and on the end plate (3) and passes through the moving platen (2), and
- a mould height adjusting device, which is arranged on the end plate (3) and with which the at least one tie bar (9) is axially adjustable in relation to the end plate (3),
**characterized in that**
the mould height adjusting device has a second tie bar nut (12), which is rotatably mounted in the end plate (3) and provided with a rotary drive (15), the second tie bar nut (12) being in connection with the end plate (3) by means of a thread, and
**in that** the tie bar (9) is firmly connected to a stop element (13), which has a greater outer dimension, in particular a greater diameter, than the tie bar (9) and can engage in a recess of the second tie bar nut (12),
the second tie bar nut (12) having an axial stop for the stop element (13),
means (10) for the program-controlled automatic clamping of the tie bar (9) in relation to the moving platen (2) being present and
means (11) for the program-controlled automatic clamping of the tie bar (9) in relation to the end plate (3) being present.

2. Apparatus according to Claim 1, **characterized in that** the second tie bar (12) and the stop element (13) are configured as concentric components.

3. Apparatus according to Claim 1 or 2, **characterized in that**, between the second tie bar nut (12) and the stop element (13), a device for the rotationally fixed connection of the two parts, in particular a feather key (14), is arranged.

4. Apparatus according to one of Claims 1 to 3, **characterized in that** a stop ring (16) is arranged on the tie bar (9) in the region of the fixed platen (1).

5. Apparatus according to one of Claims 1 to 4, **characterized in that** a motor (5), preferably a hydraulic motor, for the automatic program-controlled releasing and connecting of the tie bar (9) to the fixed platen (1) is arranged in the region of the fixed platen (1).

## Revendications

1. Machine de moulage par injection, avec
- un corps de filière (1),
- une plaque frontale (3)
- une plaque de fermeture coulissante (2),
- au moins une colonne (9), qui est disposée sans coulissement axial sur le corps de filière (1) et sur la plaque frontale (3) lorsque la machine de moulage par injection est en état de fonctionnement, et qui traverse la plaque de fermeture (2), et
- un dispositif de réglage de hauteur de montage, qui est disposé sur la plaque frontale (3) et avec lequel ladite au moins une colonne (9) est réglable axialement par rapport à la plaque frontale (3),
**caractérisée en ce que** le dispositif de réglage de hauteur de montage comprend un deuxième écrou de colonne (12) monté de façon rotative dans la plaque frontale (3), qui est pourvu d'un entraînement rotatif (15), dans laquelle le deuxième écrou de colonne (12) est en liaison avec la plaque frontale (3) par un filet, et **en ce que** la colonne (9) est solidaire d'un élément de butée (13), qui présente une plus grande dimension extérieure, en particulier un plus grand diamètre, que la colonne (9), et peut s'engager dans un évidement du deuxième écrou de colonne (12), dans laquelle le deuxième écrou de colonne (12) présente une butée axiale pour l'élément de butée (13), dans laquelle il est prévu des moyens (10) pour le serrage automatique, commandé par un programme, de la colonne (9) par rapport à la plaque de fermeture (2), et dans laquelle il est prévu des moyens (11) pour le serrage automatique, commandé par un programme, de la colonne (9) par rapport à la plaque frontale (3).

2. Dispositif selon la revendication 1, **caractérisé en ce que** le deuxième écrou de colonne (12) et l'élément de butée (13) sont des pièces concentriques.

3. Dispositif selon la revendication 1 ou 2, **caractérisé en ce qu'**un dispositif pour l'assemblage solidaire en rotation des deux pièces, en particulier une clavette parallèle (14), est disposé entre le deuxième écrou de colonne (12) et l'élément de butée (13).

4. Dispositif selon l'une quelconque des revendications 1 à 3, **caractérisé en ce qu'**une bague de butée (16) est disposée sur la colonne (9), dans la région du corps de filière (1).

5. Dispositif selon l'une quelconque des revendications 1 à 4, **caractérisé en ce qu'**un moteur (5), de préférence un moteur hydraulique, est disposé dans la région du corps de filière (1) pour la séparation et l'assemblage automatiques, commandés par un programme, de la colonne (9) avec le corps de filière (1).
